## Europäisches Patentamt
## European Patent Office
## Office européen des brevets

(19)

(11) Veröffentlichungsnummer: **0 163 025**
**B1**

(12) **EUROPÄISCHE PATENTSCHRIFT**

(45) Veröffentlichungstag der Patentschrift: **27.06.90**

(51) Int. Cl.⁵: **H 02 G 11/02**

(21) Anmeldenummer: **85103001.5**

(22) Anmeldetag: **15.03.85**

(54) **Vorrichtung zum Verstauen des Anschlusskabels einer zentralen Bordnetzversorgungsanlage.**

(30) Priorität: **30.05.84 DE 8416520 u**

(43) Veröffentlichungstag der Anmeldung:
**04.12.85 Patentblatt 85/49**

(45) Bekanntmachung des Hinweises auf die
Patenterteilung:
**27.06.90 Patentblatt 90/26**

(84) Benannte Vertragsstaaten:
**AT BE CH DE FR GB IT LI LU NL SE**

(56) Entgegenhaltungen:
**DE-U-8 303 469**
**DE-U-8 416 520**
**DE-U-8 419 599**
**GB-A- 682 407**
**US-A-2 141 909**
**US-A-4 384 688**

**PATENTS ABSTRACTS OF JAPAN, Band 7, Nr.
169 (M-231) 1314r, 26. Juli 1983; & JP - A - 58
74466 (SUMITOMO JUKIKAI KOGYO K.K.) 04-05-
1983**

(73) Patentinhaber: **Manfred Fladung GmbH
Heimbach 26
D-8752 Mömbris (DE)**

(72) Erfinder: **Fladung, Manfred
Heimbach 26
D-8752 Mömbris (DE)**

(74) Vertreter: **Stoffregen, Hans-Herbert, Dr. Dipl.-
Phys. et al
Patentanwälte Strasse & Stoffregen Salzstrasse
11a Postfach 2144
D-6450 Hanau/Main 1 (DE)**

Courier Press, Leamington Spa, England.

**Beschreibung**

Die Erfindung bezieht sich auf eine Vorrichtung zum Verstauen eines sich aus mehreren Adern zusammensetzenden Anschlußkabels einer zentralen Bordnetzversorgungsanlage mit einer drehbaren Aufwickeltrommel gemäß Oberbegriff des Anspruchs 1.

Eine derartige Vorrichtung (DE—U 83 03 469) enthält neben der Aufwickeltrommel noch eine zu dieser koaxial angeordnete Ausgleichstrommel, die oberhalb der Aufwickeltrommel liegt. Zwischen zwei Trommelflanschen der Ausgleichstrommel befindet sich ein Kanelabschnitt, der mit dem radial innen liegenden Ende der Nutzlänge des Aufwickelabschnitts verbunden ist. Beim Auf- und Abwickeln der Nutzlänge des Aufwickelabschnitts hat der Ausgleichskabelabschnitt die Form einer sich öffnenden bzw. schließenden Spirale. Der Ausgleichsabschnitt weist bei der bekannten Vorrichtung eine relativ große Länge von etwa zwei Dritteln der Länge des Aufwickelabschnitts auf. Es ist daher ein langes Kabel erforderlich, von dem nur ein Teil für den Anschluß an Flugzeuge ausgezogen werden kann. Der nicht aufwickelbare Teil beansprucht Raum und muß durch eine entsprechend starke Tragkonstruktion gehalten werden.

Aus der US—A—4,384,688 ist eine Kabelaufwickelvorrichtung bekannt, die für einen Haushalt bestimmt ist. Dabei erfolgt ein automatisches Aufrollen eines dünnen Kabels durch Federvorspannung.

In der GB—A—682,407 wird eine Aufwickelvorrichtung für Rohre oder elektrische Kabel beschrieben, wobei die einzelnen Kabelwindungen nicht einlagig nebeneinander in einer Ebene angeordnet sind. Die Kabel selbst sind recht dünn.

Der Kurzveröffentlichung der Japanischen Patentanmeldung 58-74466 ist ein spiralförmig um eine Achse drehbares optisches Faserglas zu entnehmen.

Aus der US—A—2,141,909 ist ein Aufwickelvorrichtung eines Lampenkabels bekannt. Eine Verwendung für dicke Kabel, insbesondere für solche die für die Versorgung von Bordnetzversorgungsanlagen erforderlich sind, ist nicht möglich.

Der Erfindung liegt die Aufgabe zugrunde, eine Vorrichtung der eingangs beschriebenen Gattung derart weiterzuentwickeln, daß bei möglichst einfachem Aufbau ein besonders großer Teil des Anschlußkabels für das Auf- und Abwickeln verfügbar ist, ohne daß ein unnötig langes Ausgleichskabel erforderlich ist.

Die Aufgabe wird erfindungsgemäß durch das Kennzeichen des Anspruchs 1 gelöst. Ausgestaltungen ergeben sich aus den Unteransprüchen 2 bis 15.

Durch der erfindungsgemäße Lehre wird erstmalig eine kompakte Vorrichtung zum Verstauen des Anschlußkabels einer zentralen Bordernetzversorgungsanlage zur Verfügung gestellt, bei der im Vergleich zu dem auf bzw. von der Aufwickelrolle wickelbaren Anschlußkabel ein in seiner Länge nur kurzes Ausgleichskabel erforderlich ist, um die benötigte freie Kabellänge des Anschlußkabels zur Verfügung zu stellen, ohne daß dieses selbst verdrillt, wodurch gegebenenfalls ein Brechen der das Anschlußkabel bildenden Adern erfolgen würde.

So besteht nach dem erfindungsgemäßen Vorschlag die Möglichkeit, auf eine entsprechend ausgebildete Aufwickeltrommel Anschußkabel der Länge von 18 Metern aufzuwickeln bzw. abzuwickeln, wohingegen das Ausgleichskabel nur eine Länge von ungefähr 40 bis 50 cm aufweisen muß, das noch nicht einmal spiralförmig in einer Ebene verlaufen muß, die der des Anschlußkabels entspricht.

Die Erfindung wird im folgenden anhand von in einer Zeichnung dargestellten Ausführungsbeispielen näher beschrieben, aus dem sich weitere Merkmale sowie Vorteile ergeben.

Es zeigen:

Fig. 1 eine Seitenansicht des Kopfs einer teleskopierbaren Fluggastbrücke mit einer Vorrichtung zum Verstauen des Anschlußkabels einer zentralen Bordnetzversorgungsanlage,

Fig. 2 einen Längsschnitt durch die in Fig. 1 dargestellte Vorrichtung zum Versauen des Anschlußkabels einer zentralen Bordnetzversorgungsanlage,

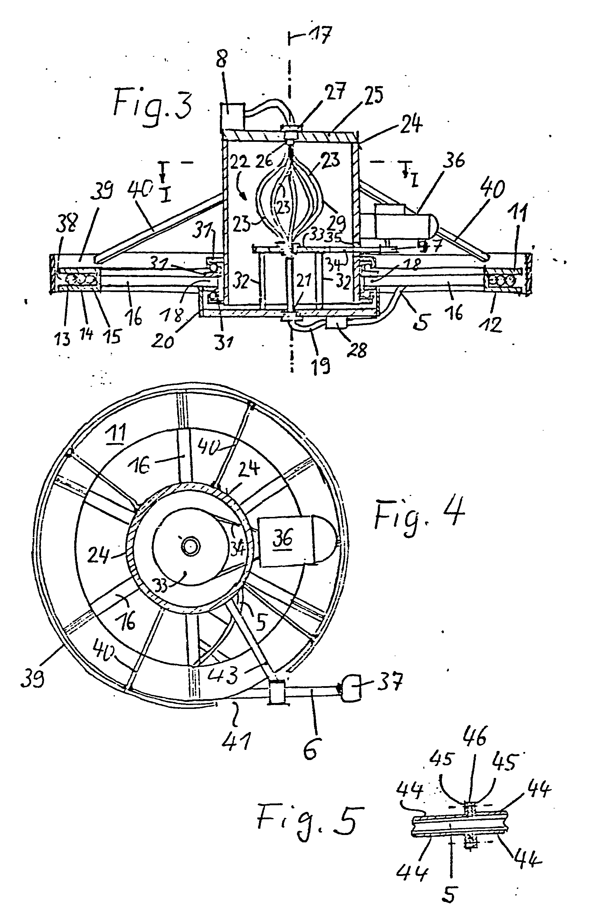

Fig. 3 einen Längsschnitt durch eine andere Ausführungsform einer Vorrichtung zum Verstauen des Anschlußkabels einer zentralen Bordnetzversorgungsanlage,

Fig. 4 einen Schnitt längs der Linien I—I der in Fig. 3 dargestellten Vorrichtung ohne auseinandergespreizte Adern des Anschlußkabels,

Fig. 5 einen Längsschnitt durch einen Randabschnitt einer Aufwickeltrommel.

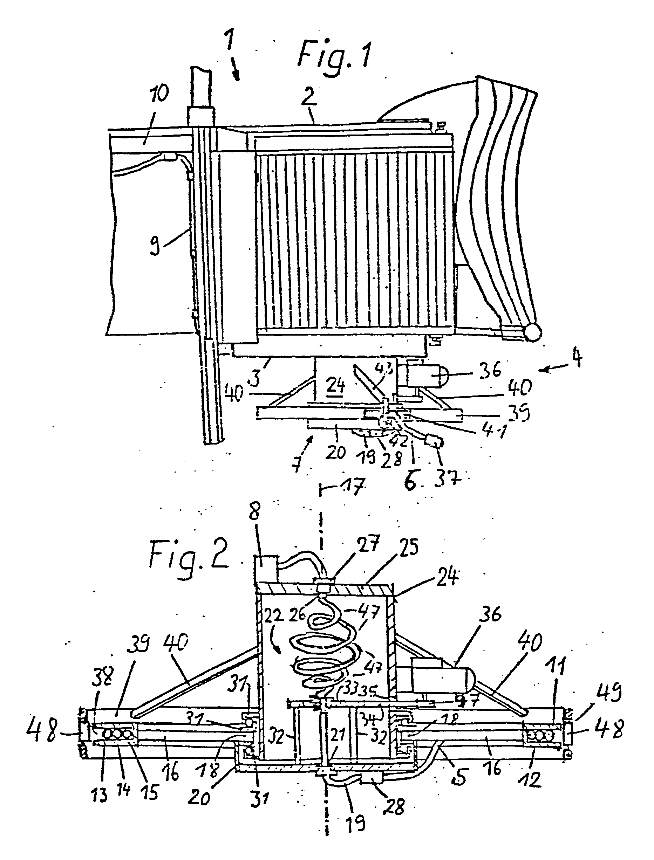

Eine teleskopierbare Fluggastbrücke 1 von der in Fig. 1 nur der vordere Teil dargestellt ist, enthält einen Kopf (2), an dessen Unterseite 3 eine Vorrichtung 4 zum Verstauen eines Anschlußkabels 5 einer zentralen Bordnetzversorgungsanlage für Flugzeuge befestigt ist. ie Vorrichtung 4 wird mit der Fluggastbrücke 1 horizontal und vertikal bewegt und eingestellt. Das Anschlußkabel 5 enthält einen Aufwickelabschnitt 6. Wenn das Anschlußkabel 5 verstaut ist, befindet sich der Aufwickelabschnitt 6 auf einer Aufwickeltrommel 7. Um ein Flugzeug über das Anschlußkabel 5 mit Energie zu versorgen, wird, je nach der Lage der Einspeisestelle am Flugzeug, ein mehr oder weniger langes Stück des Aufwickelabschnitts 6 von der Aufwickeltrommel 7 abgezogen. Das Anschlußkabel 5 verläuft bis zu einem am Kopf 2 befestigten Verteiler- bzw. Anschlußkasten 8.

Vom Anschlußkasten 8 ist ein Verbindungskabel 9 längs der teleskopierbaren Fluggastbrücke 1 verlegt. Das Verbindungskabel 9 ist an nicht näher bezeichneten Haltern aufgehängt, die in einer Schiene 10 längsverschiebbar gelagert sind, um die Länge des Verbindungskabels 10 der ausgezogenen Länge der Fluggastbrücke 1 anpassen zu können.

Die Aufwickeltrommel 7 enthält zwei seitliche, zueinander parallele Trommelscheiben 11, 12, zwischen denen das Anschlußkabel 5 in aufgewikeltem Zustand liegt. Der Abstand zwischen den beiden Trommelscheiben 11, 12 ist so auf den Durchmesser des Anschlußkabels 5 abgestimmt, daß sich die aufgewickelten Lagen 13, 14, 15 in einer Ebene nebeneinander befinden. Die beiden Trommelscheiben 11, 12 sind an ihren, der Drehachse 17 zugewandten Rändern durch einen nicht näher bezeichneten Ring miteinander und mit Speichen 16 verbunden. Von dem innen auf der Aufwickeltrommel 7 liegenden Ende des Aufwickelabschnitts 6 verläuft das Anschlußkabel 5 radial in Richtung der in Fig. 2 strichpunktiert dargestellten Drehachse der Aufwickeltrommel 7. Ein Stück vor den inneren Enden 18 der Speichen 16 beginnt ein Bogen 19 des Anschlußkabel 5. Mit dem Bogen 19 ist das Anschlußkabel 5 in die Drehachse 17 der Aufwickeltrommel 7 umgelenkt. Die Speichen 16 sind nahe an den inneren Enden 18 mit dem Rand eines nach unten ragenden zylindrischen Topfs 20 verbunden, der eine zentrische Öffnung 21 für den Durchlaß des Anschlußkabels 5 aufweist. Der Topf 20 ist starr an den Speichen 16 befestigt und mit diesen um die Achse 17 drehbar.

Das Anschlußkabel 5 enthält ein Ausgleichkabel 22, das sich in axialer Richtung der Aufwickeltrommel 7 erstreckt. Der Abschnitt 22 weist eine frei, im Raum angeordnete Kabelspirale auf, die an ihren Enden jeweils in einer Öffnung der Aufwickeltrommel 7 gehalten ist. Die Kabelspirale des Ausgleichkabels 22 besteht aus mehreren, z.B. drei bis vier Windungen 47, die im Raum zwischen den als Führungs- und Halteelemente vorgesehenen Öffnungen freiliegend angeordnet sind. In Fig. 2 ist eine der Öffnungen mit 26 bezeichnet, während die andere Öffnung nicht näher bezeichnet ist. Die Öffnungen sind in Richtung der Drehachse 17 angeordnet. Das Ausgleichkabel 22 verläuft längs der Drehachse 17 der Aufwickeltrommel 7 und befindet sich in einem zylindrischen Gehäuse 24, auf dessen Außenseite die Aufwickeltrommel 7 drehbar gelagert ist. Das Gehäuse 24 ist an seiner oberen Stirnseite mit einer Abdeckung 25 versehen, die eine zentrische Öffnung 26 für den Durchlaß des Anschlußkabels 5 enthält. In die Offnung 26 ist eine Kabelverschraubung 27 eingesetzt, mit der das Anschlußkabel 5 gehalten wird, das in Höhe der Öffnung 26 wieder von dem nicht näher bezeichneten, äußeren Kabelmantel umgeben ist.

Der Bogen 19 des Anschlußkabels 5 ist in einer außen am Boden des Topfs 20 angebrachten Halterung 28 geführt. Die Halterung 28 ist außermittig, d.h. in einem gewissen Abstand von der Öffnung 21 angeordnet.

Innerhalb des nicht näher bezeichneten Kabelmantels verlaufen die Adern des Anschlußkabels 5 ebenfalls spiralförmig. Wenn sich der Aufwickelabschnitt 6 auf der Aufwickeltrommel 7 befindet, ist die radiale Ausdehnung der Windungen 47 oder Kabelspirale am größten. Die Kabelspirale ist dann am wenigstens verdreht. Es ist möglich, daß sich beim Aufwickeln die Anzahl der Windungen 47 verkleinert. Wenn der Aufwickelabschnitt 6 von der Aufwickeltrommel 7 abgezogen ist, sind die Windungen 47 wieder stärker miteinander verdreht. Die radiale Ausdehnung ist am kleinsten. Je nach dem Grad der Verdrehung können wieder mehr Windungen vorhanden sein. Die Länge des Ausgleichkabels 22, die radiale Ausdehnung und die Anzahl der Windungen 47 sind auf die auf- bzw. abzuwickelnden Lagen 13, 14, 15 und deren Durchmesser abgestimmt. Mit der Kabelspirale läßt sich bei drei Lagen 13, 14, 15 ohne weiteres eine Abwickellänge von mindestens 18 m Kabel erreichen. Durch mehr Lagen kann unter entsprechender Anpassung der Kabelspirale eine noch größere Abwickellänge erreicht werden. Die Länge des Ausgleichkabels 22 beträgt dabei umgefähr 0,5 m.

Bie einer anderen Ausführungsform liegen die Adern 23 des Anschlußkabels 7 in dem Ausgleichkabel 22 frei. Die Adern 23 können jeweils aus verschiedenen Leitern bestehen, die von einer gemeinsamen Isolierhülle umgeben sind. Bei den Adern 23 handelt es sich im Leitungen, die den einzelnen Phasen eines 400-Hz-Drehstroms zugeordnet sind, und um Steuerleitungen. Beispielsweise sind im Anschlußkabel 5 sieben Adern für Starkstrom und mindestens sechs Adern für Steuerleitungen vorgesehen. Mit dem äußeren Mantel, der beim Abschnitt 22 entfernt ist, hat das Anschlußkabel 5 einen Durchmesser von etwa 46 mm. In den Adern für Steuerleitungen können sich zahlreiche einzelne Steuerleitungen befinden.

Die Adern 23 verlaufen innerhalb des nicht näher bezeichneten Kabelmantels der Anschlußkabels 5 spiralförmig. Im Ausgleichkabel 22 ist der spiralförmige Verlauf gegenüber der Lage innerhalb des Kabelmantels schwächer. Wenn sich der Aufwickelabschnitt 6 auf der Aufwickeltrommel 7 befindet, ist der spiralförmige Verlauf der Adern 23 am schwächsten. Die Adern 23 sind am wenigstens miteinander verdrillt und weisen deshalb in radialer Richtung der Aufwickeltrommel 7 sich erstreckende Ausbauchungen 29 auf. Wenn der Aufwickelabschnitt 6 von der Aufwickeltrommel 7 abgezogen ist, sind die Adern 23 wieder stärker miteinander verdrillt, so daß die radiale Erstreckung der Ausbauchungen 29 geringer ist. Die Länge des Abschnitts 22 mit den freiliegenden Adern 23 ist auf die Anzahl der auf- bzw. abzuwickelnden Lagen 13, 14, 15 und deren Durchmesser abgestimmt. Bei vollständig abgezogenem Aufwickelabschnitt 6 dart die Verdrillung der Adern 23 nicht stärker sein als die in einem Anschlußkabel 5 mit geschlossenem Außenmantel vorhandene Verdrillung. Vorzugsweise ist die Länge des Ausgleichkabels 22 so gewählt, daß die Verdrillung bei vollständig abgezogenem Aufwickelabschnitt 6 etwas geringer ist als die Verdrillung der Adern 23 innerhalb des geschlossenen äußeren Kabelmantels. Wenn der Durchmesser der aufgewickelten Lagen 13, 14, 15 größer gewählt wird, ergibt, sich daher eine kleinere Länge des Ausgleichkabels 22. Im Allgemeinen reicht ein Aufwickelabschnitt 6 von 18 m Länge aus. Bei einem Durchmesser der mittleren Lage 14 von etwa 1,6 bis 2,4 m reichen die drei Lagen 13, 14, 15 völlig aus, um nach dem Abwickeln 18 m Kabel zur Verfügung zu stellen. Die Länge des Ausgleichkabels 22 übersteigt dabei nicht etwa 0,6 bis 0,4 m.

Es läßt sich daher eine Vorrichtung 4 mit kompakten Abmessungen und relativ geringem Gewicht herstellen. Besonders vorteilhaft ist, daß die Länge des Aufwickelabschnitts 6 sehr viel größer als die Länge des Ausgleichkabels 22 einschließlich des Bogens 19 ist. Das Anschlußkabel 5 wird daher besser ausgenutzt. Es wird nicht mehr ein so großer Kabelanteil benötigt, der nach dem vollen Abwickeln noch auf der Kabeltrommel verbleibt. Neben der Einsparung an dem relativ aufwendigen Kabel ergeben sich daher noch weitere Vorteile durch die Gewichtseinsparung, d.h. die Kabeltrommel wird nicht mehr von so großen Gewichten belastet. Dies bedeutet, daß die Vorrichtung 4 konstruktiv einfacher und leichter ausgebildet sein kann.

Die Aufwickeltrommel 7 ist an den inneren Rändern 18 der Speichen 17 je mit Führungsbahnen 30 versehen, denen Flansche 31 gegenüberstehen, die von der Außenseite des Gehäuses 24 der Aufwickeltrommel 7 vorspringen. Die Führungsbahnen 30 und die Flansche 31 bilden mit nicht näher dargestellten Kugeln oder Tonnen Axialwälzlager. Diese Anordnung ist für die vertikale Ausrichtung der Drehachse 17 geeignet. Die Trommelscheiben 11, 12 erstrecken sich dabei in horizonthaler Richtung.

Auf der Innenseite des Bodens des Topfs 20 sind Stäbe 32 befestigt, die konzentrisch und parallel zu der Drehachse 17 verlaufen. Die Stäbe 32 erstrecken sich über ein Stück der Länge des Abschnitts 22. Auf dem dem Boden des Topfs 20 abgewandten Enden der Stäbe 32 ist ein Antriebsrad 33 befestigt, das konzentrisch zur Drehachse 17 verläuft. Das Antriebsrad 33 hat einen Durchlaß, der auf die Ausbauchung 29 abgestimmt sein kann. Der Durchlaß, der nicht näher bezeichnet ist, weist zweckmäßigerweise an seinen Wänden eine Verkleidung aus einem elektrisch isolierenden Stoff auf, gegen die sich die Adern 23 legen können.

Das Abtriebsrad 33 ist vorzugsweise als Zahnrad ausgebildet, auf das eine Kette 34 aufgezogen ist, die durch eine Öffnung 35 im Gehäuse 24 verläuft. Außen am Gehäuse 24 ist eine Antriebseinheit 36 befestigt, die einen nicht näher bezeichneten Getriebemotor enthält, dessen Ausgangswelle ein Ritzel 47 trägt um das die Kette 34 gelegt ist. Der Getriebemotor läßt sich auf zwei, einander entgegengesetzte Drehrichtungen umschalten. Über den Getriebemotor und die Kette 34 wird bedarfsweise ein Drehmoment auf die Aufwickeltrommel 7 ausgeübt, wenn das Anschlußkabel 5 auf- oder abgewickelt wird. Das Ein- und Ausschalten des Getriebemotors erfolgt über einen nicht näher dargestellten Schalter, der sich an einer Steckeinheit 37 befindet, die am Ende des Anschlußkabels 5 befestigt ist. Das Anschlußkabel 5 wird bei eingeschaltetem Getriebemotor mit der von der Drehzahl der Aufwickeltrommel 7 und von den Durchmessern der Lagen 13, 14, 15 bestimmten Geschwindigkeit auf- oder abgewickelt. Für das Auf- und Abwickeln reicht eine Person aus.

Die Aufwickeltrommel 7 weist zwischen den Trommelscheiben 11, 12 eine nach außen gerichtete Öffnung 38 auf, der eine zylindrische Abdeckung 39 gegenüber steht, die die Form eines Ringes hat.

Zwischen den äußeren Rändern der Trommelscheiben 11, 12 und der Abdeckung 39 befindet sich nur ein kleiner Spalt. Die Abdeckung 39 ist mit Trägern 40 am Gehäuse 24 befestigt. Durch die Abdeckung 39 wird das Anschlußkabel 5 geschützt. Die Abdeckung 39 weist eine Unterbrechung 41 auf. An der Stelle der Unterbrechung 41 tritt das Anschlußkabel 5 aus der Aufwickeltrommel 7 in etwa tangential aus.

Nahe der Unterbrechung 41 ist eine Auflagerolle 42 vorgesehen, auf der das Anschlußkabel 5 geführt ist. Die Auflagerolle 42, die eine konkave Oberfläche haben kann, um das Anschlußkabel 5 zu führen, befindet sich mit ihrer Oberseite in Höhe der Trommelscheibe 12. Das Anschlußkabel 5 wird daher immer an der gleichen Stelle auf- und abgewickelt. Die Auflagerolle 42 verbindert, daß der Mantel des Anschlußkabels 5 an den Kanten der Trommelscheiben 11, 12 scheuert. Außerdem wird durch die Auflagerolle 42 eine zusätzliche Gewichtsentlastung geschaffen. Die Auflagerolle 42 ist in einem Träger 43 drehbar gelagert, der am Gehäuse 24 befestigt ist. Bei dem Träger 43 kann es sich auch um ein Gestänge handeln.

Um zu verhindern, daß in den Trommelscheiben 11, 12 bei höheren Frequenzen des Stroms im Anschlußkabel 5 störende Wirbelströme auftreten, sind die Trommelscheiben 11, 12 aus einzelnen Abschnitten 44 aufgebaut, deren einander zugewandte Enden 45 abgewinkelt sind. Zwischen den Enden 45 befinden sich Lagen 46 aus Isolierstoff. Die Enden 45 sind miteinander durch nicht näher dargestellte Schrauben verbunden, die in isolierenden Hülsen geführt sind, um Kurzschlüsse zwischen benachbarten Abschnitten 44 auzuschalten.

Beim Abwickeln des Anschlußkabels 5, insbesondere bei größeren Abwickelgeschwindigkeiten, dehnt sich das Anschlußkabel 5 radial aus. Um eine gute Führung des Anschlußkabels 5 und geringere Kräft für das Auf- und Abwickeln zu erreichen, sind längs des Umfangs der Aufwickeltrommel 7 nahe an der Öffnung 38 in gleichmäßigem Abstand Andrückrollen 48 vorgesehen, die achsparallel zur Drehachse 17 drehbar gelagert sind. Die Andrückrollen 48 sind vorzugsweise in Ausnehmungen 49 der Abdeckung 39 angeordnet. Die Andrückrollen 48 ragen in Richtung der Öffnung 38 über die Innenseite der Abdeckung 39 hinaus. Längs des äußeren Umfangs von ungefähr 2,5 m ist es günstig etwa 40 bis 50 Andrückrollen 48 vorzusehen.

**Patentansprüche**

1. Vorrichtung zum Verstauen eines sich aus mehreren Adern (23) zusammensetzenden dicken Anschlußkabels (5) einer zentralen Bordnetzversorgungsanlage insbesondere für Flugzeuge, mit einer drehbaren Aufwickeltrommel (7), auf der einlagig in einer Ebene nebeneinander mehrere Windungen des Anschlußkabels aufwickelbar sind, sowie einem von dem inneren Ende des auf der Aufwickeltrommel angeordneten spiralförmig verlaufenden Anschlußkabels ausgehenden mit einem Festanschluß wie Anschlußkasten (8) verbundenen Ausgleichskabels (22), wobei das innere Ende des Anschlußkabels (5) in einem Bogen (19) in die Drehachse (17) der Aufwickeltrommel (7) umgelenkt ist und wobei bei auf der Aufwickeltrommel aufgewickeltem Anschlußkabel die radiale Ausdehnung des spiralförmig verlaufenden Ausgleichskabels größer als bei abgewickeltem Anschlußkabel ist, dadurch gekennzeichnet, daß das Ausgleichskabel (22) sich in Achsrichtung der Aufwickeltrommel freiliegend und derart spiralförmig erstreckt, daß das Ausgleichskabel (22) beim Abwickeln des Anschlußkabels (5) von der Aufwickeltrommel stärker und beim Aufwickeln schwächer spiralförmig um die Achsrichtung unter gleichzeitiger Verdrillung des Anschlußkabels verdreht ist.

2. Vorrichtung nach Anspruch 1, dadurch gekennzeichnet, daß zumindest in dem in Achsrichtung der Aufwickeltrommel (7) sich erstreckenden Abschnitt des Ausgleichskabels (22) die Adern (23) freiliegend sind.

3. Vorrichtung nach zumindest Anspruch 1, dadurch gekennzeichnet, daß zumindest der spiralförmig verdrehbare Abschnitt des Ausgleichskabels (22) von einem zylindrischen Gehäuse (24) umgeben ist, auf dessen Außenseite die Aufwickeltrommel (7) drehbar gelagert ist.

4. Vorrichtung nach Anspruch 3, dadurch gekennzeichnet, daß die Aufwickeltrommel (7) zwei parallele Trommelscheiben (11, 12) enthält, die mit Speichen (16) verbunden sind, die an ihren inneren Enden (18) mittels Axialwälzlagern auf von der Außenseite des zylindrischen Gehäuses (24) vorspringenden Flanschen (31) drehbar gelagert sind.

5. Vorrichtung nach Anspruch 4, dadurch gekennzeichnet, daß die Speichen (16) der Aufwickeltrommel (7) nahe an ihren inneren Rändern mit dem Rande eines nach unten ragenden zylindrischen Topfs (20) verbunden sind, der eine zentrische Öffnung (21) aufweist, durch die das innere Ende des Anschlußkabels (5) geführt ist, das an einer mit dem Topf (20) verbundenen Halterung (28) befestigt ist.

6. Vorrichtung nach zumindest Anspruch 3, dadurch gekennzeichnet, daß im Innern des Gehäuses (24) ein Antriebsrad (33) angeordnet ist, das formschlüssig mit dem Boden des Topfs (20) verbunden ist, eine zentrische Öffnung für den Durchlaß des Anschlußkabels (5) aufweist und mit einer Antriebseinheit (36) verbunden ist, die auf der Außenseite des Gehäuses (24) befestigt ist.

7. Vorrichtung nach zumindest Anspruch 1, dadurch gekennzeichnet, daß die Aufwickeltrommel (7) über eine Kette (34) mit einem Getriebemotor verbunden ist, der in zwei zueinander entgegengesetzten Drehrichtungen betreibbar ist.

8. Vorrichtung nach zumindest Anspruch 3, dadurch gekennzeichnet, daß das Gehäuse (24) an seinem oberen Ende geschlossen ist und eine zentrische Öffnung (26) für das Ausgleichskabel (22) aufweist.

9. Vorrichtung nach zumindest Anspruch 6, dadurch gekennzeichnet, daß das Antriebsrad (33) als Zahnrad ausgebildet und in axialer Richtung des Gehäuses (24) oberhalb der Axialwälzlager angeordnet ist.

10. Vorrichtung nach zumindest Anspruch 6, dadurch gekennzeichnet, daß in Höhe des Antriebsrades (33) eine Öffnung (35) im Gehäuse (24) vorgesehen ist, durch das die Kette (34) verläuft.

11. Vorrichtung nach zumindest Anspruch 1, dadurch gekennzeichnet, daß die peripher zwischen den Trommelscheiben (11, 12) verlaufende Öffnung (38) der Aufwickeltrommel (7) von einer zylindrischen Abdeckung (39) umgeben ist, die mit Trägern (40) am Gehäuse (24) befestigt ist und die eine Unterbrechung (41) an der Austrittsstelle des Anschlußkabels (5) aufweist.

12. Vorrichtung nach Anspruch 11, dadurch gekennzeichnet, daß nahe an der Unterbrechung (41) eine Auflagerolle (42) für das Anschlußkabel (5) vorgesehen ist.

13. Vorrichtung nach Anspruch 12, dadurch gekennzeichnet, daß die Auflagerolle (42) drehbar in einem am Gehäuse (24) befestigten Träger (43) gelagert ist.

14. Vorrichtung nach zumindest Anspruch 4, dadurch gekennzeichnet daß die Trommelscheiben (11, 12) aus einzelnen Abschnitten (44) mit Isolierstoffzwischenlagen (46) bestehen.

15. Vorrichtung nach zumindest einem der vorausgehenden Ansprüche, dadurch gekennzeichnet, daß längs des äußeren Umfang der Aufwickeltrommel (7) im Abstand voneinander, achsparallel zu der Aufwickeltrommel (7) Andrückrollen (48) für die äußere Lage (13) des Anschlußkabels (5) drehbar angeordnet sind.

**Revendications**

1. Dispositif pour loger un câble de connexion (5) épais composé de plusieurs fils (23) d'une unité centrale d'alimentation en courant, notamment pour avions, avec un tambour de bobinage (7) pouvant tourner, sur lequel plusieurs spires du câble de connexion peuvent être bobinées côte à côte en une couche dans un plan ainsi qu'un câble d'équilibrage (22) partant de l'extrémité interne du câble de connexion disposé en spirale sur le tambour et lié à une connexion fixe comme une boîte de connexion (8), ou l'extrémité interne du câble de connexion (5) s'enroule par un coude (19) sur l'axe de rotation (17) du tambour de bobinage (7), et pour le câble de connexion bobiné sur le tambour, l'extension radiale du câble d'équilibrage en spirale est plus grande que lorsque le câble de connexion est débobiné, caractérisé en ce que le câble d'équilibrage (22) s'étend librement en spirale dans le sens de l'axe du tambour de bobinage de sorte que le câble d'équilibrage (22), est mis en torsion par le débobinage du câble de connexion (5) du tambour plus fortement et au bobinage, il est mis en torsion moins fortement en direction de l'axe, tout en torsadant simultanément le câble de connexion.

2. Dispositif selon la revendication 1, caractérisé en ce que, au moins pour la partie du câble d'équilibrage s'étendant dans le sens de base du tambour de bobinage (7), les fils (23) sont libres.

3. Dispositif selon au moins la revendication 1, caractérisé en ce que, au moins, la partie du câble d'équilibrage (22), pouvant être enroulée en spirale, est entourée d'un boîtier (24) cylindrique, sur la face externe duquel est logé en rotation le tambour de bobinage (7).

4. Dispositif selon la revendication 3, caractérisé en ce que le tambour de bobinage (7) comprend deux disques parallèles de tambour (11, 12) qui sont liés à des rayons (16), logés en rotation à leurs extrémités internes (18) au moyen de paliers axiaux, sur des brides (31) débordant de la face externe du boîtier cylindrique (24).

5. Dispositif selon la revendication 4, caractérisé en ce que les rayons (16) du tambour de bobinage sont reliés à proximité de leurs bords internes au bord d'un pot cylindrique (20) dépassant vers le bas, qui présente une ouverture centrée (21) par laquelle passe l'extrémité interne du câble de fixation (5), qui est fixé par un support (28) solidaire, du pot (20).

6. Dispositif selon au moins la revendication 3, caractérisé en ce que, à l'intérieur du boîtier (24), est disposée une roue d'entraînement (33), qui est reliée mécaniquement au fond du pot (20), qui présente une ouverture centrée pour le passage du câble de connexion (5) et qui est liée à une unité d'entraînement (36), fixée sur la face externe du boîtier (24).

7. Dispositif selon au moins la revendication 1, caractérisé en ce que le tambour de bobinage (7) est relié par une chaîne au motoréducteur, qui peut fonctionner dans deux sens de rotation opposés.

8. Dispositif selon au moins la revendication 3, caractérisé en ce que le boîtier (24) est fermé à sa partie supérieure et qu'il présente une ouverture centrée (26) pour le câble d'équilibrage (22).

9. Dispositif selon au moins la revendication 6, caractérisé en ce que la roue d'entraînement (33) est en forme de roue dentée et est disposée en sens axial par rapport au boîtier (24) au-dessous du palier axial.

10. Dispositif selon au moins la revendication 6, caractérisé en ce qu'au niveau de la roue d'entraînement (33) est prévue une ouverture (35), dans le boîtier (24) qui laisse passer la chaîne (34).

11. Dispositif selon au moins la revendication 1, caractérisé en ce que l'ouverture (38) du tambour de bobinage (7) qui s'étend périphérique- ment entre les disques du tambour (11, 12) est entourée d'un couvercle cylindrique (39), fixé par des supports (40) au boîtier (24) et présente un interrupteur (41) pour la sortie du câble de connexion (5).

12. Dispositif selon la revendication 11, caractérisé en ce que à proximité de l'interrupteur (41) est prévu un rouleau (42) pour le câble de connexion (5).

13. Dispositif selon la revendication 12, caractérisé en ce que le rouleau (42) peut tourner et est logée sur un support (43) fixé sur le boîtier (24).

14. Dispositif selon au moins la revendication 4, caractérisé en ce que les disques du tambour (11, 12) sont constitués de sections indépendantes (44) avec des couches de matériau isolant (46).

15. Dispositif selon au moins l'une des revendications précédentes, caractérisé en ce que le long de la périphérie externe du tambour de bobinage (7) à distance l'un de l'autre, d'axe parallèle au tambour de bobinage (7) sont disposés en rotation des rouleaux presseurs (48) pour le positionnement externe (13) du câble de connexion (5).

**Claims**

1. Device for storing a connection cable (5) of a central board mains supply installation, particularly for aircraft, consisting of several strands (23), having a rotatable take-up drum (7) onto which several windings of the connection cable are wound next to one another in one layer in a plane, as well as an equalising cable (22) extending from the inner end of the connection cable arranged spirally on the take-up drum connected to a fixed connection—like terminal box (8), whereby the inner end of the connection cable (5) is turned around in a curve (19) into the axis of rotation (17) of the take-up drum (7) and whereby, with the connection cable wound onto the take-up drum, the radial expansion of the spirally arranged equalisation cable is greater than with the unwound connection cable, characterised in that the equalisation cable (22) extends uncovered and spirally in the axial direction of the take-up drum in such a way that the equalisation cable (22) is twisted around the axial direction in a tighter spiral during paying out of the connection cable (5) from the take-up drum, and in a looser spiral during winding on when the connection cable is twisted simultaneously.

2. Device according to claim 1, characterised in that the strands (23) are uncovered at least in the section of the equalising cable (22) extending in the axial direction of the take-up drum (7).

3. Device according to at least claim 1, characterised in that at least the spirally rotatable section of the equalising cable (22) is enclosed by a cylindrical housing (24), around the outside of which the take-up drum (7) is mounted rotatable.

4. Device according to claim 3, characterised in that the take-up drum (7) contains two parallel drum discs (11, 12) which are connected to spokes (16), which are mounted rotatable on their inner ends (18) to flanges (31) projecting from the outside of the cylindrical housing (24) by means of axial roller bearings.

5. Device according to claim 4, characterised in that the spokes (16) of the take-up drum (7) are connected to the edge of a cylindrical pot (20) extending downwardly near their inner edges, the pot comprising a central opening (21) through which the inner end of the connection cable (5) is guided, which is mounted to a holder (28) connected to the pot (20).

6. Device according to at least claim 3, characterised in that a drive wheel (33) is arranged in the inside of the housing (24), the drive wheel being connected form-closed to the bottom of the pot (20), comprising a central opening for the passage of the connection cable (5) and being connected to a drive unit (36) which is mounted on the outside of the housing.

7. Device according to at least claim 1, characterised in that the take-up drum (7) is connected to a drive motor via a chain (34), the drive motor being operable in two opposing rotary directions.

8. Device according to at least claim 3, characterised in that the housing (24) is closed at its top end and has a central opening (26) for the equalising cable (22).

9. Device according to at least claim 6, characterised in that the drive wheel (33) is formed as a toothed gear and is arranged in the axial direction of the housing (24) above the axial roller bearing.

10. Device according to at least claim 6, characterised in that an opening (35) is provided in the housing (24) in the height of the drive wheel (33), through which the chain passes.

11. Device according to at least claim 1, characterised in that the peripheral opening between the drum discs (11, 12) of the take-up drum (7) is enclosed by a cylindrical cover (39) which is mounted at the housing (24) with carriers (40) and which has a discontinuity (41) at the exit of the connection cable (5).

12. Device according to claim 11, characterised in that a support roller (42) is provided for the connection cable (5) close to the discontinuity (41).

13. Device according to claim 12, characterised in that the support roller (42) is mounted rotatable in a carrier (43) mounted at the housing (24).

14. Device according to at least claim 4, characterised in that the drum discs (11, 12) consist of individual sections (44) having intermediate layers (46) of insulating material.

15. Device according to at least one of the preceding claims, characterised in that, along the outer circumference of the take-up drum, spaced from one another, pressing rollers (48), which are axially parallel to the take up drum (7), are rotatably arranged at the outer position (13) of the connection cable (5).

Fig.1

Fig.2

1

Fig.3

Fig. 4

Fig. 5